# FASCICULE DE BREVET EUROPEEN

(11) **EP 2 768 685 B1**
(45) Date de publication et mention de la délivrance du brevet: **02.03.2016**
(21) Numéro de dépôt: 12772996.0
(22) Date de dépôt: 19.10.2012
(51) Int. Cl.: B60K 7/00, F16H 57/04

(54) **METHODE DE LUBRIFICATION D'UN MOYEU MOTORISE**
SCHMIERUNGSVERFAHREN EINES RADNABENMOTORS
LUBRICATION METHOD OF A WHEEL HUB MOTOR

(30) Priorité: 20.10.2011 FR 1159480
(43) Date de publication de la demande: 27.08.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BAUMGARTNER, Gérard, 63040 Clermont-Ferrand Cédex 9 (FR); WALSER, Daniel, 63040 Clermont-Ferrand Cédex 9 (FR)
(74) Mandataire: Lasson, Cédric Y. M.
(86) Numéro de dépôt international: PCT/EP2012/070762
(87) Numéro de publication internationale: WO 2013/057254

(56) Documents cités:
- WO-A1-2011/073320
- US-A1- 2006 219 449
- US-A1- 2009 101 424

## Description

La présente invention concerne les véhicules automobiles à traction électrique, en particulier les véhicules disposant de roues motorisées électriquement qui peuvent être découplées de leur machine électrique lorsque le véhicule est mû par l'intermédiaire d'une autre source de traction.

Dans ce domaine, on connaît un certain nombre de propositions comme celles des documents EP 1950072, US 2010/0108417 ou WO 2011/073320.

La demande WO 2011/073320, qui sert de base pour la présentation en deux parties de la revendication 1, propose par exemple un moyeu motorisé pour véhicule hybride comprenant des moyens de couplage/découplage permettant de découpler la machine électrique du moyeu lorsque l'on souhaite au contraire utiliser l'autre source de traction, c'est à dire le moteur thermique. Des moyens de réduction sous la forme d'engrenages sont également prévus. Ces différents éléments sont contenus dans un carter étanche et lubrifiés principalement par barbotage dans un lubrifiant également contenu dans ledit carter.

Un problème avec ce type de moyeu motorisé est celui d'assurer une bonne lubrification des joints tournants pendant que le véhicule utilise la traction thermique, en particulier sur une longue distance. En effet, le barbotage des engrenages étant interrompu, la lubrification en particulier du joint assurant l'étanchéité du carter sur le moyeu pourrait s'avérer insuffisante dans certaines conditions. Le problème de l'invention est donc celui de garantir une lubrification suffisante y compris lorsque la traction électrique n'est pas utilisée sur une longue distance.

Dans la présente demande, on utilise l'expression « moyeu motorisé » pour désigner l'ensemble mécanique comprenant le moyeu, le porte-moyeu, le guidage du moyeu par rapport au porte-moyeu, la motorisation électrique et les moyens de freinage du moyeu. Le moyeu motorisé est donc destiné d'une part à recevoir une roue équipée par exemple d'un pneumatique et à porter d'autre part un véhicule, généralement par l'intermédiaire de moyens de suspension. Dans la présente demande, on utilise également l'expression « roue motorisée » pour désigner l'ensemble mécanique comprenant le moyeu motorisé défini ci-dessus et la roue correspondante.

L'invention propose donc une méthode de lubrification d'un moyeu motorisé destiné à la motorisation électrique d'un essieu d'un véhicule automobile, ledit véhicule disposant également d'une autre source de traction, ledit moyeu motorisé comprenant un moyeu destiné à recevoir une roue, le moyeu étant monté rotatif par rapport à un porte-moyeu, le moyeu motorisé comprenant une machine électrique de traction, la machine électrique comprenant un stator externe lié au porte-moyeu et un rotor interne, le moyeu motorisé comprenant des moyens de réduction agissant entre le rotor de la machine électrique et le moyeu, le moyeu motorisé comprenant des moyens de couplage/découplage aptes à adopter une position de couplage dans laquelle la rotation de la machine électrique est couplée à la rotation du moyeu et une position de découplage dans laquelle la rotation de la machine électrique est découplée de la rotation du moyeu, les moyens de réduction et les moyens de couplage/découplage étant contenus dans un carter, le carter contenant en outre un lubrifiant, la lubrification du moyeu motorisé étant assurée par la rotation de la machine électrique, ladite méthode étant caractérisée en ce qu'elle comprend une phase de lubrification consistant à faire tourner la machine électrique alors que les moyens de couplage/découplage sont en position de découplage et que le véhicule est mu par l'autre source de traction.

On comprend que si l'on provoque la rotation de la machine électrique et donc le barbotage, la lubrification du moyeu motorisé et en particulier celle des joints du carter est assurée même si la machine électrique demeure découplée et ne transmet donc aucun couple au moyeu.

De préférence, laquelle ladite phase de lubrification est répétée selon une fréquence qui est fonction de la distance parcourue par le véhicule à l'aide de l'autre source de traction.

De préférence encore, fréquence est en outre fonction de la moyenne quadratique de la vitesse du véhicule sur la distance parcourue par le véhicule à l'aide de l'autre source de traction.

De préférence encore, la durée de ladite phase de lubrification est inférieure à 10 secondes.

De préférence encore, on fait tourner la machine électrique à une vitesse de rotation inférieure à 50% de la vitesse de rotation maximale de la machine électrique, de préférence encore inférieure à 25%.

De préférence encore, on fait tourner la machine électrique associée à une roue de l'essieu dans un sens de rotation correspondant à la marche avant du véhicule et on fait tourner la machine électrique associée à l'autre roue de l'essieu dans un sens de rotation correspondant à la marche arrière.

D'autres caractéristiques et avantages de l'invention apparaîtront grâce à la description d'un mode préféré de réalisation. Les figures représentent respectivement:
- Figure 1 : vue schématique d'un dispositif pour la mise en oeuvre de la méthode de l'invention.
- Figure 2 : graphique montrant la relation entre la vitesse moyenne du véhicule et la distance séparant deux phases de lubrification selon un exemple de réalisation de la méthode l'invention.

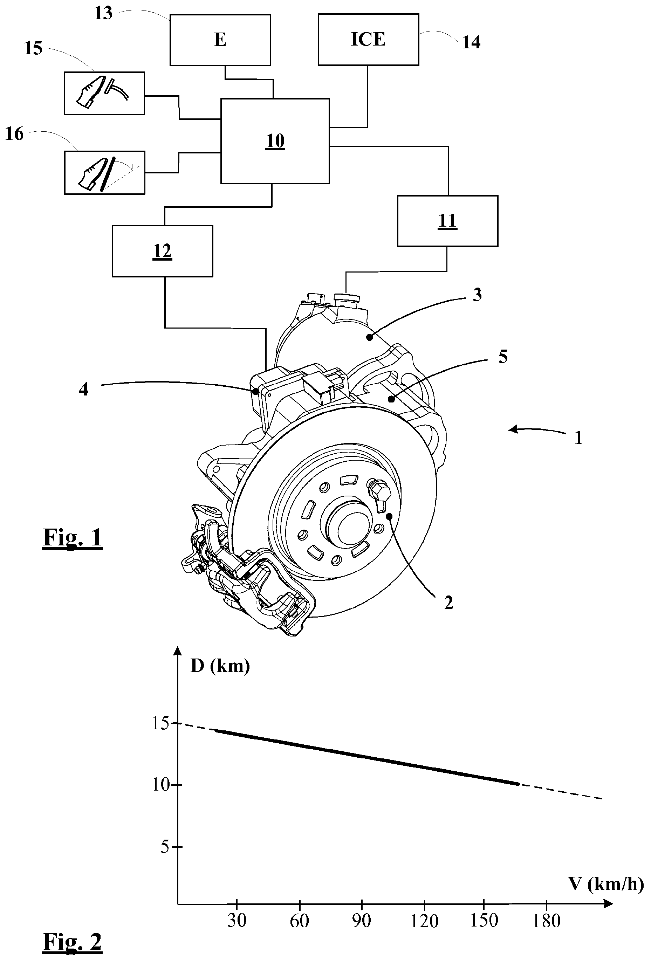

A la figure 1, on a représenté un exemple de dispositif permettant de mettre en oeuvre la méthode de lubrification de l'invention. Le moyeu motorisé 1 est par exemple celui décrit dans la demande WO 2011/073320. Il comprend en particulier un moyeu 2, ce moyeu étant destiné à recevoir une roue (non représentée), une machine électrique de traction 3, des moyens de couplage/découplage 4 et un carter 5 contenant des moyens de réduction, les moyens de couplage/découplage et un lubrifiant de barbotage. De manière connue en soi, les différentes fonctions d'un tel moyeu motorisé sont contrôlées par un contrôleur 10 en fonctions de nombreux paramètres disponibles concernant par exemple l'état du véhicule et de ses réserves d'énergie électrique (13) et les demandes du conducteur (15, 16). En particulier, le contrôleur commande par l'intermédiaire d'une unité de pilotage de la machine électrique (par exemple un onduleur 11) le couple transmis par la machine électrique et donc sa vitesse de rotation. Le contrôleur commande également les moyens de couplage/découplage de la machine électrique par l'intermédiaire d'un organe de pilotage des moyens de couplage/découplage (12). Cet organe peut être indépendant mais il peut également être combiné ou intégré à l'unité de pilotage de la machine électrique (11).

Le contrôleur peut gérer en outre la mise en oeuvre de l'autre source de traction, par exemple un moteur thermique (14). Ainsi, la gestion de deux ou plusieurs sources de traction est assurée en permanence par le contrôleur selon une multitude de scénarios possibles. La méthode de lubrification de l'invention peut donc être intégrée à cette gestion globale du véhicule par le contrôleur.

Selon l'invention, lorsque le véhicule est mu uniquement par le moteur thermique, on introduit de temps en temps une phase de lubrification dans laquelle la machine électrique est lancée sans que les moyens de couplage/découplage n'adoptent leur position couplée. La durée de ces phases est de préférence très courte, de l'ordre de quelques secondes, par exemple entre 2 et 5 secondes. Ces phases sont de préférence répétées en fonction de la distance parcourue à l'aide de l'autre source de traction depuis la phase précédente.

La figure 2 représente graphiquement un exemple de la fonction permettant d'adapter la distance (D en km) qui sépare deux phases de lubrification successives en fonction de la moyenne quadratique de la vitesse (V en km/h) à laquelle s'est déplacé le véhicule entre les deux phases de lubrification considérées.

Sur cet exemple, la distance est au maximum de 15 km et décroit linéairement en fonction de la vitesse (en moyenne quadratique).

Durant la phase de lubrification, la vitesse de rotation de la machine électrique est de préférence relativement faible par rapport à sa vitesse maximale, par exemple de l'ordre de 10% à 25% de la vitesse maximale. En pratique, on peut choisir la vitesse de rotation selon différents critères, par exemple au cours d'essais visant à constater une lubrification suffisante pour une durée de rotation la plus courte possible ou une dépense énergétique la plus faible possible.

Le sens de rotation de la machine électrique n'étant pas lié au sens d'avancement du véhicule, il peut être avantageux de privilégier pour chaque moyeu motorisé du véhicule le sens de rotation qui assure la lubrification la plus efficace au moindre coût (énergie, vibrations, bruits). Ainsi, il est apparu intéressant d'utiliser, pour la phase de lubrification, un sens de rotation inverse d'un côté du véhicule par rapport à l'autre (par exemple correspondant à la marche avant à gauche et à la marche arrière à droite).

De même, il peut être préférable de privilégier certaines conditions de roulage pour déclencher une phase de lubrification. Par exemple, on peut vouloir éviter de la déclencher au cours d'une décélération ou à faible vitesse stabilisée afin qu'elle ne génère pas de bruit audible par les passagers du véhicule.

Un avantage de l'invention est qu'elle donne l'occasion d'une vérification périodique du fonctionnement de la chaîne de traction électrique alors qu'elle peut rester inutilisée pendant un long trajet.

Bien que la présente description se concentre sur un mode de réalisation préféré dans lequel l'autre source est une chaine de traction à moteur thermique, l'invention peut s'appliquer à un véhicule dans lequel l'autre source est également une chaine de traction électrique, utilisant ou non des moyeux motorisées similaires ou différents des moyeux motorisés de la première source.

## Revendications

1. Méthode de lubrification d'un moyeu motorisé (1) destiné à la motorisation électrique d'un essieu d'un véhicule automobile, ledit véhicule disposant également d'une autre source de traction, ledit moyeu motorisé comprenant un moyeu (2) destiné à recevoir une roue, le moyeu étant monté rotatif par rapport à un porte-moyeu, le moyeu motorisé comprenant une machine électrique de traction (3), la machine électrique comprenant un stator externe lié au porte-moyeu et un rotor interne, le moyeu motorisé comprenant des moyens de réduction agissant entre le rotor de la machine électrique et le moyeu, le moyeu motorisé comprenant des moyens de couplage/découplage (4) aptes à adopter une position de couplage dans laquelle la rotation de la machine électrique est couplée à la rotation du moyeu et une position de découplage dans laquelle la rotation de la machine électrique est découplée de la rotation du moyeu, les moyens de réduction et les moyens de couplage/découplage étant contenus dans un carter (5), le carter contenant en outre un lubrifiant, la lubrification du moyeu motorisé étant assurée par la rotation de la machine électrique, ladite méthode étant **caractérisée en ce qu'**elle comprend une phase de lubrification consistant à faire tourner la machine électrique alors que les moyens de couplage/découplage sont en position de découplage et que le véhicule est mu par l'autre source de traction (14).

2. Méthode selon la revendication 1 dans laquelle ladite phase est répétée selon une fréquence qui est fonction de la distance parcourue par le véhicule à l'aide de l'autre source de traction.

3. Méthode selon la revendication 2 dans laquelle la fréquence est en outre fonction de la moyenne quadratique de la vitesse du véhicule sur la distance parcourue par le véhicule à l'aide de l'autre source de traction.

4. Méthode selon l'une des revendications précédentes dans laquelle la durée de ladite phase de lubrification est inférieure à 10 secondes.

5. Méthode selon l'une des revendications précédentes dans laquelle on fait tourner la machine électrique à une vitesse de rotation inférieure à 50% de la vitesse de rotation maximale de la machine électrique, de préférence encore inférieure à 25%.

6. Méthode selon l'une des revendications précédentes dans laquelle on fait tourner la machine électrique associée à une roue de l'essieu dans un sens de rotation correspondant à la marche avant du véhicule et on fait tourner la machine électrique associée à l'autre roue de l'essieu dans un sens de rotation correspondant à la marche arrière.

## Patentansprüche

1. Verfahren zum Schmieren einer motorisierten Nabe (1), die für die elektrische Motorisierung einer Radachse eines Kraftfahrzeugs bestimmt ist, wobei das Fahrzeug ebenfalls über eine andere Antriebsquelle verfügt, wobei die motorisierte Nabe eine Nabe (2) enthält, die dazu bestimmt ist, ein Rad aufzunehmen, wobei die Nabe bezüglich eines Nabenträgers drehbar montiert ist, wobei die motorisierte Nabe eine elektrische Antriebsmaschine (3) enthält, wobei die elektrische Maschine einen mit dem Nabenträger verbundenen externen Stator und einen internen Rotor enthält, wobei die motorisierte Nabe Untersetzungseinrichtungen enthält, die zwischen dem Rotor der elektrischen Maschine und der Nabe wirken, wobei die motorisierte Nabe Kopplungs-/Entkopplungseinrichtungen (4) enthält, die eine Kopplungsstellung, in der die Drehung der elektrischen Maschine mit der Drehung der Nabe gekoppelt ist, und eine Entkopplungsstellung einnehmen können, in der die Drehung der elektrischen Maschine von der Drehung der Nabe entkoppelt ist, wobei die Untersetzungseinrichtungen und die Kopplungs-/Entkopplungseinrichtungen in einem Gehäuse (5) enthalten sind, wobei das Gehäuse außerdem ein Schmiermittel enthält, wobei die Schmierung der motorisierten Nabe durch die Drehung der elektrischen Maschine gewährleistet wird, wobei das Verfahren **dadurch gekennzeichnet ist, dass** es eine Schmierphase enthält, die darin besteht, die elektrische Maschine zu drehen, während die Kopplungs-/Entkopplungseinrichtungen in der Entkopplungsstellung sind und das Fahrzeug durch die andere Antriebsquelle (14) bewegt wird.

2. Verfahren nach Anspruch 1, wobei die Phase gemäß einer Frequenz wiederholt wird, die von der vom Fahrzeug mit Hilfe der anderen Antriebsquelle gefahrenen Strecke abhängt.

3. Verfahren nach Anspruch 2, wobei die Frequenz außerdem vom quadratischen Mittelwert der Geschwindigkeit des Fahrzeugs auf der vom Fahrzeug mit Hilfe der anderen Antriebsquelle gefahrenen Strecke abhängt.

4. Verfahren nach einem der vorhergehenden Ansprüche, wobei die Dauer der Schmierphase geringer als 10 Sekunden ist.

5. Verfahren nach einem der vorhergehenden Ansprüche, wobei die elektrische Maschine mit einer Drehgeschwindigkeit von weniger als 50% der maximalen Drehgeschwindigkeit der elektrischen Maschine gedreht wird, vorzugsweise noch geringer als 25%.

6. Verfahren nach einem der vorhergehenden Ansprüche, wobei die einem Rad der Radachse zugeordnete elektrische Maschine in einer Drehrichtung gedreht wird, die dem Vorwärtsgang des Fahrzeugs entspricht, und die dem anderen Rad der Radachse zugeordnete elektrische Maschine in einer dem Rückwärtsgang entsprechenden Drehrichtung gedreht wird.

## Claims

1. Method of lubrication of a motorised hub (1) intended for the electric drive of an axle of a motor vehicle, said vehicle also having another traction source, said motorised hub comprising a hub (2) intended to receive a wheel, the hub being mounted rotating in relation to a hub carrier, the motorised hub comprising an electric traction machine (3), the electric machine comprising an external stator linked to the hub carrier and an internal rotor, the motorised hub comprising reduction means acting between the rotor of the electric machine and the hub, the motorised hub comprising coupling/decoupling means (4) able to adopt a coupled position, in which the rotation of the electric machine is coupled to the rotation of the hub, and a decoupled position, in which the rotation of the electric machine is decoupled from the rotation of the hub, the reduction means and the coupling/decoupling means being contained in a housing (5), the housing also containing a lubricant, lubrication of the motorised hub being provided by rotation of the electric machine, said method being **characterised in that** it comprises a lubrication phase consisting of causing the electric machine to rotate when the coupling/decoupling means are in the decoupled position and the vehicle is propelled by the other traction source (14).

2. Method according to Claim 1, wherein said phase is repeated with a frequency which is a function of the distance travelled by the vehicle using the other traction source.

3. Method according to Claim 2, wherein the frequency is also a function of the square mean of the vehicle speed over the distance travelled by the vehicle using the other traction source.

4. Method according to any of the preceding claims, wherein the duration of said lubrication phase is less than 10 seconds.

5. Method according to any of the preceding claims, wherein the electric machine rotates at a rotation speed of less than 50% of the maximum rotation speed of the electric machine, preferably less than 25%.

6. Method according to any of the preceding claims, wherein the electric machine associated with one wheel of the axle rotates in a rotation direction corresponding to the forward motion of the vehicle, and the electric machine associated with the other wheel of the axle rotates in a rotation direction corresponding to the reverse motion.
